# FASCICULE DE BREVET EUROPEEN

(11) **EP 2 905 589 B1**
(45) Date de publication et mention de la délivrance du brevet: **10.01.2018**
(21) Numéro de dépôt: 15153129.0
(22) Date de dépôt: 29.01.2015
(51) Int. Cl.: G01H 3/12, G10K 11/00, H04R 1/40

(54) **Antenne de mesure**
Messantenne
Measuring antenna

(30) Priorité: 07.02.2014 FR 1450937
(43) Date de publication de la demande: 12.08.2015
(73) Titulaire: Dyva, 69008 Lyon (FR)
(72) Inventeur: Bollade, Laurent, 69008 LYON (FR); Chassaignon, Christian, 60270 GOUVIEUX (FR)
(74) Mandataire: den Braber, Gerard Paul

(56) Documents cités:
- EP-A1- 2 584 326
- EP-A2- 1 599 708
- EP-A2- 1 983 316
- DE-U1-202008 002 958
- US-A1- 2002 196 707
- "Array Star48 | AC pro 48 channel system for various measurement scenarios", , 1 mai 2012 (2012-05-01), XP055148918, Extrait de l'Internet: URL:http://www.acoustic-camera.com/fileadm in/acoustic-camera/support/downloads/data- sheets/Arrays/Star_48_AC_Pro.pdf [extrait le 2014-10-24]

## Description

La présente invention se rapporte à une antenne de mesure.

L'invention s'applique, en particulier, à une antenne de mesure de type acoustique comportant un réseau de microphones pour réaliser une imagerie acoustique.

L'imagerie acoustique regroupe des techniques qui permettent de localiser et caractériser une source sonore en fournissant une image des niveaux acoustiques générés par la source sonore en divers points de l'espace à proximité de la source sonore.

L'imagerie acoustique est notamment utilisée pour l'évaluation du bruit, dans diverses applications industrielles, environnementales ou en recherche et développement, à des fins telles que la conception de machines ou produits silencieux ou la réduction des nuisances sonores dans un environnement donné. Elle est, en particulier, utilisée dans le cadre de mesures acoustiques pour la réduction du bruit, afin d'établir des diagnostics précis permettant d'identifier et de hiérarchiser des sources sonores.

Les systèmes d'imagerie acoustique comprennent généralement une antenne acoustique dotée d'un réseau de microphones permettant la mesure du son, un dispositif d'analyse et de traitement de la mesure, et un système de visualisation des résultats.

Afin de procéder à des mesures de bruit sur des machines de grande taille ou pour des applications nécessitant la couverture d'un large périmètre, telle que la mesure de bruit liée au passage d'un véhicule, il est nécessaire d'utiliser des antennes présentant une certaine envergure, à savoir des antennes dont une dimension minimale, et notamment un diamètre minimum dans le cas d'une antenne sensiblement circulaire, est supérieure à 1 m, et dont une dimension maximale, et notamment un diamètre minimum dans le cas d'une antenne sensiblement circulaire, peut atteindre plusieurs mètres, par exemple jusqu'à 6 m.

De telles antennes sont également utiles lorsqu'il s'agit de localiser et caractériser, de manière précise, des sources sur une large plage de fréquences. Les antennes présentent une résolution fréquentielle qui dépend de la taille de l'antenne, surtout à basses fréquences. Elles présentent, par ailleurs, une résolution spatiale qui dépend de la densité de microphones, surtout à hautes fréquences. Ainsi, plus l'antenne est grande et comporte un nombre important de microphones, plus les résolutions fréquentielle et spatiale de l'antenne peuvent être élevés, ce qui permet de travailler sur une large plage de fréquences. Dans le domaine de l'imagerie acoustique, la plage de fréquences couverte correspond généralement au domaine des fréquences audibles par l'homme, à savoir d'environ 20 Hz à environ 20 kHz.

Le document EP 2 584 326 A1 décrit une antenne de mesure qui donne entière satisfaction. L'installation d'une telle antenne de mesure nécessite néanmoins un montage à l'endroit où la mesure doit être effectuée susceptible d'allonger la durée d'intervention.

Il est, par ailleurs, connu notamment des documents https:// www.acoustic-camera.com/fileadmin/acoustic-camera/support/downloads/data-sheets/ Arrays/Star_48_AC_Pro.pdf (descriptif du système de mesure Array Star48 de gfait tech GmbH), EP 1 983 316 A2 et EP 1 599 708 B1 des antennes de mesure comprenant une armature constituée de tiges d'armature rigide supportant des microphones. Les tiges d'armature sont montées pivotantes sur un moyeu de manière à pouvoir être déplacées entre un état rabattu dans lequel les tiges d'armature sont rapprochées de l'axe central, et un état déployé dans lequel les tiges d'armature sont écartées de l'axe central.

Toutefois, les principes de conception de ces antennes ne permettent pas d'obtenir à la fois, une distribution optimale des microphones (par exemple en tronçon de spirale) sur une large envergure (par exemple 2 m ou 6 m) et une reproductibilité satisfaisante de la position des microphones à l'état déployé, et, un poids et un encombrement contenus y compris dans l'état rabattu permettant une mobilité satisfaisante.

L'invention vise à pallier les problèmes évoqués ci-dessus.

A cette fin, l'invention propose une antenne de mesure telle que définie à la revendication 1. Les revendications dépendantes 2 à 9 définissent des caractéristiques supplémentaires qui peuvent être appliquées pour mettre en oeuvre l'invention.

Cette antenne de mesure présente une armature simple, légère et facilement transportable du fait de sa compacité dans l'état rabattu. L'armature peut également passer de manière réversible, simple, rapide, sûre et efficace de l'état rabattu à l'état déployé, dans lequel, sous l'effet de contraintes internes résultant de la déformation des tiges d'armature par le biais des organes de liaison, elle présente une forme stable avec une rigidité d'ensemble permettant d'assurer la reproductibilité de la position des microphones à l'état déployé et la fiabilité des mesures.

Du fait de la concavité axiale de l'armature supportant les capteurs de mesure, l'antenne de mesure présente en outre l'avantage de permettre une discrimination entre des signaux venant d'une face avant de l'antenne de mesure et des signaux venant d'une face arrière de l'antenne de mesure. Ces dispositions sont utiles notamment pour des mesures réalisées dans un espace fermé tel qu'une pièce d'un bâtiment.

Dans une application particulière, l'antenne de mesure peut être une antenne acoustique adaptée pour réaliser une imagerie acoustique et dans laquelle les capteurs de mesure sont des microphones. L'invention propose donc aussi un système d'imagerie acoustique et une utilisation d'une antenne de mesure pour réaliser une imagerie acoustique, qui font respectivement l'objet des revendications 10 et 11.

D'autres objets et avantages de l'invention apparaîtront à la lecture de la description qui suit d'un mode de réalisation particulier de l'invention donné à titre d'exemple non limitatif, la description étant faite en référence aux dessins annexés, dans lesquels :
- la figure 1 est une représentation en perspective d'une face avant d'une antenne de mesure selon un mode de réalisation de l'invention, l'antenne de mesure comprenant une armature, illustrée dans un état déployé, s'étendant verticalement sur un mât,
- la figure 2 est une représentation en perspective d'une face arrière de l'antenne de mesure de la figure 1,
- la figure 3 est une représentation en plan de la face avant de l'antenne de mesure de la figure 1,
- la figure 4 est une représentation en plan d'une face latérale de l'antenne de mesure de la figure 1,
- la figure 5 est une représentation en perspective de l'antenne de mesure de la figure 1, illustrant l'armature dans un état rabattu,
- les figures 6, 7 et 8 sont des représentations en perspective de l'antenne de mesure de la figure 1 à différentes étapes de son installation à l'endroit où une mesure doit être effectuée, la figure 6 illustrant l'antenne de mesure lorsque l'armature passe de l'état rabattu à l'état déployé, la figure 7 étant un agrandissement du détail référencé VII sur la figure 6 et la figure 8 illustrant l'antenne de mesure lorsque l'armature s'étend dans l'état déployé horizontalement sur le mât.

Sur les figures, les mêmes références désignent des éléments identiques ou analogues.

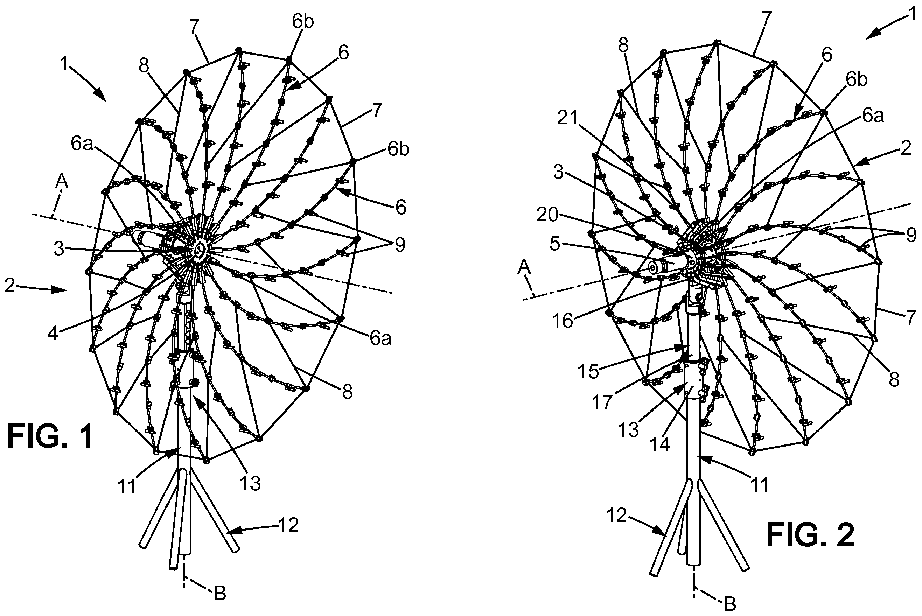

Les figures 1 à 4 représentent une antenne de mesure adaptée pour recevoir un ou plusieurs signaux en vue de pouvoir traiter ces signaux et d'exploiter des données issues du traitement de ces signaux.

Dans le mode de réalisation représenté, sans y être limitée, l'antenne de mesure est une antenne acoustique 1 adaptée pour recevoir des signaux sous la forme d'ondes acoustiques provenant d'une source sonore en vue de pouvoir obtenir, après traitement des signaux, une image acoustique de la source sonore.

L'antenne acoustique 1 comporte une armature 2 représentée sur les figures 1 à 4 dans un état déployé et présentant une envergure E définie, dans le mode de réalisation représenté, par un diamètre d'une ouverture de l'armature 2. L'envergure E peut être comprise entre un mètre et plusieurs mètres, notamment comprise entre 1 m et 6 m, par exemple comprise entre 2 m et 3 m.

Comme il ressortira de la suite de la description, du fait de la structure et des matériaux utilisés, l'armature 2 peut être portée et manipulée à la main par une personne seule.

L'armature 2 comporte un moyeu 3 réalisé en un matériau rigide, léger et résistant, tel que de l'aluminium. Le moyeu 3 présente un axe central A et comporte une plaque support 4 s'étendant transversalement par rapport à l'axe central A. Dans le mode de réalisation représenté, la plaque support 4 présente une bordure périphérique circulaire. Le moyeu 3 comporte également un arbre 5 qui s'étend selon l'axe central A depuis la plaque support 4.

L'armature 2 comporte également des tiges d'armature 6, au nombre de seize sur les figures 1 à 4, réparties uniformément autour de l'axe central A. En variante, le nombre et la répartition des tiges d'armature 6 pourraient être différents.

Chacune des tiges d'armature 6 est élastiquement déformable de manière à pouvoir être déformée tout en étant rappelée élastiquement vers un état libre dans lequel elle est sensiblement droite. La structure et/ou le matériau de chacune des tiges d'armature 6 sont choisis en conséquence. Par exemple, dans le mode de réalisation particulier représenté, chaque tige d'armature 6 peut être cylindrique de section circulaire dans l'état libre. Chaque tige d'armature 6 peut, par ailleurs, être réalisée en fibre de carbone, kevlar, aluminium ou toute matière composite comprenant ces matériaux. Outre sa capacité à se déformer élastiquement, le matériau de la tige d'armature 6 est choisi pour être résistant et léger de telle manière que l'antenne acoustique 1 soit aisément manipulable et transportable et puisse résister aux diverses contraintes, telles que la dilatation, l'oxydation ou la prise au vent, liées à une utilisation possible en environnement extérieur.

Chacune des tiges d'armature 6 présente une première extrémité 6a montée sur la plaque support 4 du moyeu 3 et une deuxième extrémité 6b opposée à la première extrémité 6a. Les deuxièmes extrémités 6b des tiges d'armature 6 définissent l'ouverture de l'armature 2 dans l'état déployé représenté.

L'armature 2 comporte des organes de liaison qui lient les tiges d'armature 6 entre elles pour les conformer de telle manière que l'armature 2, tout en ayant une structure simple et légère, présente, dans l'état déployé, une rigidité d'ensemble.

Les organes de liaison comprennent notamment des élingues externes 7 reliant deux à deux les deuxièmes extrémités 6b de deux tiges d'armature 6, qui sont adjacentes dans le mode de réalisation représenté. En variante, suivant la déformation souhaitée, tout autre agencement des élingues externes 7 entre deux tiges d'armature 6 différentes de celles décrites précédemment pourrait être envisagé.

Chacune des élingues externes 7 comprend un câble, par exemple en acier inoxydable, en nylon ou autre, dont deux extrémités opposées sont fixées par tout dispositif appropriée aux deuxièmes extrémités 6b des deux tiges d'armature 6 adjacentes. Le câble présente une longueur inférieure à une distance entre les deuxièmes extrémités 6b des deux tiges d'armature 6 adjacentes qui s'étendraient à l'état libre radialement par rapport à l'axe central A. Dans l'état déployé, le câble de chaque élingue externe 7 est tendu, contraignant ainsi les tiges d'armature 6 adjacentes de telle manière que leurs deuxièmes extrémités 6b soient rapprochées l'une de l'autre par rapport à la distance précitée à laquelle elles se tiendraient dans l'état libre.

Les élingues externes 7 déforment ainsi les tiges d'armature 6, dans un même sens, de telle manière que la deuxième extrémité 6b de chaque tige d'armature 6 soit décalée selon l'axe central A par rapport à un plan P1 perpendiculaire à l'axe central A passant par les premières extrémités 6a des tiges d'armature 6. Une telle déformation des tiges d'armature 6 définit globalement pour l'armature 2 une concavité axiale. La concavité axiale est centrée sur l'axe central A et s'étend entre le moyeu 3 et l'ouverture de l'armature 2 définie par les deuxièmes extrémités 6b des tiges d'armature 6 disposées dans un même plan. Dans le mode réalisation particulier représenté, la convexité axiale de l'armature 2 dans l'état déployé résulte d'une courbure axiale de chacune des tiges d'armature 6 depuis la première extrémité 6a, au voisinage de laquelle la tige d'armature 6 s'étend sensiblement radialement par rapport à l'axe central A et s'écarte de l'axe central A, vers la deuxième extrémité 6b, au voisinage de laquelle la tige d'armature 6 est déformée vers l'axe central A.

Dans d'autres modes de réalisation, cette concavité axiale résultant du décalage selon l'axe central A des deuxièmes extrémités 6b des tiges d'armature 6 par rapport aux premières extrémités 6a pourrait être obtenue de toute autre manière appropriée, par exemple, par des tiges d'armature 6 droites inclinées depuis le moyeu 3.

Les organes de liaison comprennent également des élingues internes 8 reliant chacune un emplacement d'une première portion de l'une des tiges d'armature 6 à un emplacement d'une deuxième portion d'une autre tige d'armature 6. Dans le mode de réalisation particulier représenté, chacune des élingues internes 8 relie deux tiges d'armature 6 agencées de part et d'autre d'une tige d'armature 6 intermédiaire. Chacune des élingues internes 8 relie plus précisément un emplacement de la première portion située au voisinage de la première extrémité 6a de l'une des tiges d'armature 6, par exemple sensiblement au tiers de la tige d'armature 6, à un emplacement de la deuxième portion située au voisinage de la deuxième extrémité 6b de l'autre tige d'armature 6, par exemple directement sur la deuxième extrémité 6b. En variante, suivant la déformation souhaitée, tout autre agencement des élingues internes 8 entre des tiges d'armature 6 différentes de celles décrites précédemment et des première et deuxième portions des tiges d'armature 6 différentes de celles décrites précédemment pourrait être envisagé.

Chacune des élingues internes 8 comprend un câble, par exemple en acier inoxydable, en nylon ou autre, dont deux extrémités opposées sont fixées par tout dispositif appropriée aux emplacements des première et deuxième portions des tiges d'armature 6. Le câble présente une longueur inférieure à une distance entre les deux emplacements des première et deuxième portions des tiges d'armature 6 qui s'étendraient à l'état libre radialement par rapport à l'axe central A. Dans l'état déployé, le câble de chaque élingue interne 8 est tendu, contraignant ainsi les tiges d'armature 6 de telle manière que les première et deuxième portions de ces tiges d'armature 6 soient rapprochées l'une de l'autre par rapport à la distance précitée à laquelle elles se tiendraient dans l'état libre.

Les élingues internes 8 déforment ainsi les tiges d'armature 6, dans un même sens, de telle manière que la deuxième extrémité 6b de chaque tige d'armature 6 soit décalée selon un axe transversal perpendiculaire à l'axe central A par rapport à un plan P2 comprenant l'axe central A et passant par la première extrémité 6b de la tige d'armature 6. Une telle déformation de chacune des tiges d'armature 6 définit une courbure transversale perpendiculairement à l'axe central A entre les première 6a et deuxième 6b extrémités. Dans le mode réalisation particulier représenté, chacune des tiges d'armature 6 dans l'état déployé de l'armature 2 a une forme en tronçon de spirale dont la courbure transversale présente un rayon de courbure qui augmente depuis la première extrémité 6a jusqu'à la deuxième extrémité 6b.

La combinaison de la courbure axiale avec la courbure transversale en forme de tronçon de spirale confère à chacune des tiges d'armature 6 une forme globale de tronçon d'hélice conique.

L'antenne acoustique est, par ailleurs, pourvue d'un réseau de capteurs de mesure constitués, dans le mode de réalisation représenté, par des microphones 9 adaptés pour recevoir les ondes acoustiques. En particulier, les microphones 9 peuvent être adaptés pour détecter des sons dont la plage de fréquences est d'environ 20 Hz à environ 20 kHz, de préférence d'environ 100 Hz à 10 000 Hz, et encore plus préférentiellement d'environ 300 Hz à 6000 Hz.

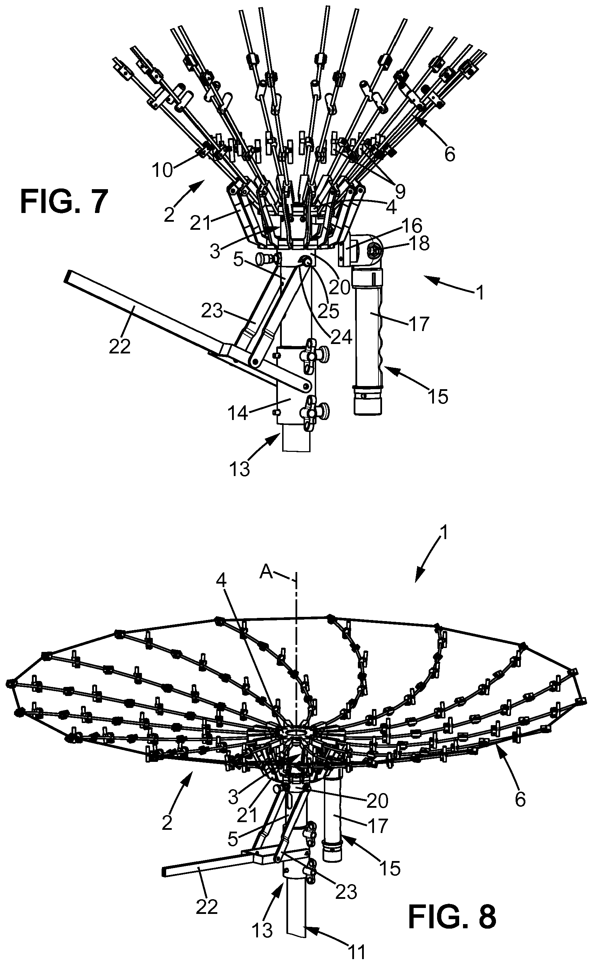

Des supports de capteur 10, au nombre de quatre sur les figures 1 à 4, adaptés chacun pour recevoir l'un des microphones 9, sont montés à équidistance les uns des autres sur chacune des tiges d'armature 6. Chaque support de capteur 10, particulièrement visible sur la figure 7, peut comporter une articulation permettant d'adapter une orientation du microphone 9 par rapport à la tige d'armature 6 sur laquelle il est monté. En variante, le nombre et la répartition des microphones 9 pourraient être différents.

L'antenne acoustique 1 comprend également un mât 11 qui s'étend selon un axe B entre un pied 12 adapté pour reposer de manière stable sur un sol, et une tête 13 sur laquelle le moyeu 3 de l'armature 2 peut être monté de manière amovible.

En particulier, pour ce faire, le moyeu 3 comprend en outre un bras de liaison 15 fixé sur la plaque support 4. Le bras de liaison 15 comprend un flasque coudé 16 particulièrement visible sur la figure 7. Le flasque coudé 16 comporte une première partie qui s'étend dans le prolongement de la plaque support 4, perpendiculairement à l'axe central A, et une deuxième partie qui s'étend perpendiculairement depuis la première partie, parallèlement à l'axe central A, en regard de l'arbre 5 du moyeu 3. Le bras de liaison 15 comprend également une poignée 17 solidarisée à la deuxième partie du flasque coudé 16 de manière à s'étendre perpendiculairement à l'axe central A et à l'arbre 5 du moyeu 4. La poignée 17 est montée sur la tête 13 du mât 11 par l'intermédiaire d'un manchon de fixation 14 solidaire de la tête 13, de telle manière que la poignée 17 du bras de liaison 15 s'étende coaxialement au mât 11. L'axe central A du moyeu 3 s'étend alors perpendiculairement à l'axe B du mât 11 et l'armature 2 de l'antenne acoustique 1 s'étend globalement verticalement avec son ouverture orientée horizontalement.

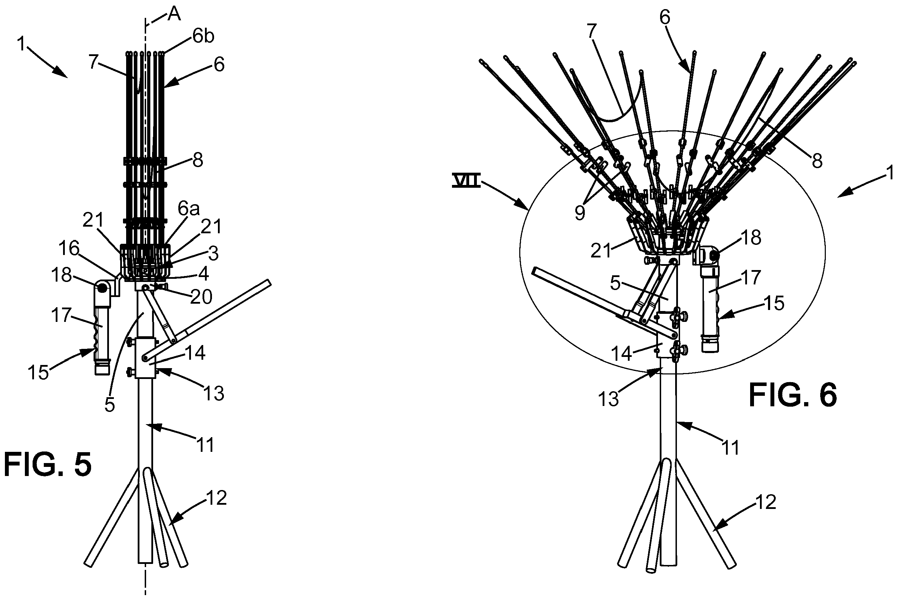

Comme représenté sur la figure 5, le bras de liaison 15 comporte une articulation 18 entre le flasque coudé 16 et la poignée 17. L'articulation 18 est réalisée, dans le mode de réalisation représenté, sous la forme d'un pivot d'axe perpendiculaire à l'axe central A. La poignée 17 peut donc être pivotée par rapport au moyeu 3 afin qu'elle s'étende parallèlement à l'axe central A et à l'arbre 5 du moyeu 3. Dans cette position, la poignée 17 peut être retirée de la tête 13 du mât 11 et une extrémité libre de l'arbre 5 du moyeu 3, opposée à la plaque support 4, peut être montée sur la tête 13 du mât 11 par l'intermédiaire du manchon de fixation 14. L'axe central A du moyeu 3 s'étend alors coaxialement à l'axe B du mât 11.

L'armature 2 peut, par ailleurs, être placée dans un état rabattu dans lequel les tiges d'armature 6 sont rapprochées de l'axe central A et s'étendent sensiblement parallèlement à l'axe central A. En particulier, dans cet état rabattu, les organes de liaison, dont seules une élingue externe 7 et une élingue interne 8 sont représentées pour des raisons de clarté, sont lâches et laissent l'ensemble des tiges d'armature 6 dans leur état libre.

Sur les figures 6 et 7, pour permettre à l'armature 2 de passer de l'état déployé à l'état rabattu, la première extrémité 6a de chacune des tiges d'armature 6 est montée pivotante sur la plaque support 4 selon un axe de pivotement perpendiculaire à l'axe central A et sensiblement tangent à la bordure périphérique de la plaque support 4. Le moyeu 3 comprend, par ailleurs :
- un coulisseau 20 monté coulissant sur l'arbre 5 selon l'axe central A,
- une pluralité de bielles 21 s'étendant chacune entre une première extrémité montée pivotante selon un premier axe parallèle à l'axe de pivotement sur l'une des tiges d'armature 6, et une deuxième extrémité montée pivotante selon un deuxième axe parallèle à l'axe de pivotement sur le coulisseau 20.

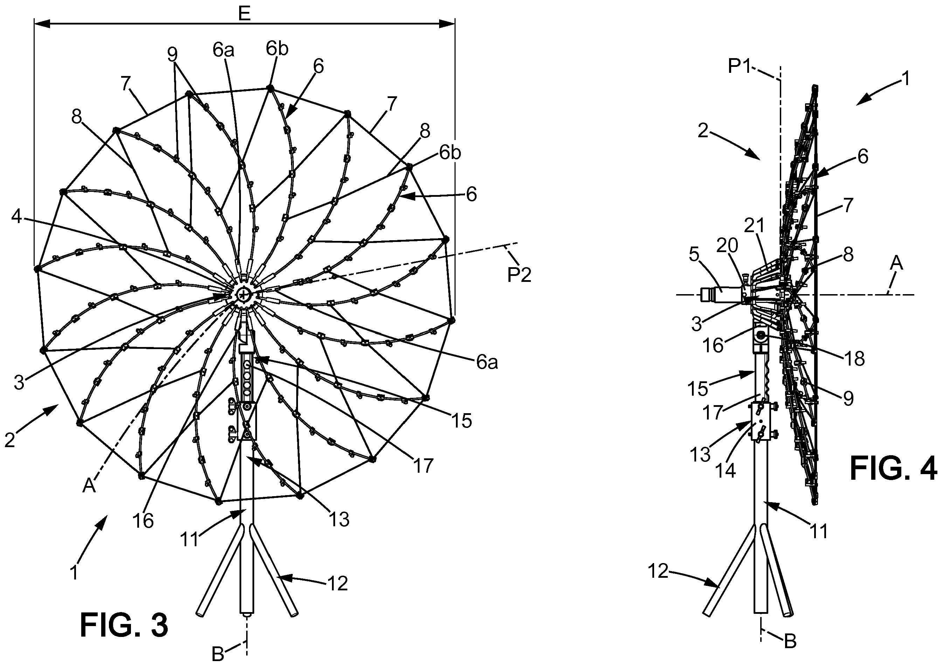

Les bielles 21 sont conformées pour :
- dans une première position du coulisseau 20 située à proximité de la plaque support 4 et représentée sur la figure 5, pousser les tiges d'armature 6 pour les rapprocher de l'axe central A de manière à placer l'armature 2 dans l'état rabattu, et
- dans une deuxième position du coulisseau 20 située à distance de plaque support 4 et représentée notamment sur la figure 4, tirer les tiges d'armature 6 pour les écarter de l'axe central A de manière à placer l'armature 2 dans l'état déployé.

Le déplacement du coulisseau 20 peut être commandé par tout dispositif approprié et notamment, dans le mode de réalisation représenté, par un dispositif manuel. Le dispositif manuel comprend un levier 22 actionnable à la main par un utilisateur et monté pivotant selon un axe perpendiculaire à l'axe B du mât 11 sur le manchon de fixation 14. Le levier 22 est relié au coulisseau 20 de telle manière qu'un actionnement du levier 22 entraîne un coulissement du coulisseau 20 entre ses première et deuxième positions. En particulier, une ou plusieurs tiges de connexion 23, deux dans le mode de réalisation représenté, sont montées pivotantes selon un axe perpendiculaire à l'axe B du mât 11 sur le levier 22. Chaque tige de connexion 23 présente une extrémité libre pourvue d'une encoche 24 adaptée pour s'engager de manière pivotante et libérable sur des ergots 25 faisant saillie transversalement par rapport à l'axe central A sur le coulisseau 20.

Ainsi, pour installer l'antenne acoustique 1 en vue de réaliser une mesure, l'utilisateur positionne le mât 11 sur son pied 12. Il place ensuite l'armature 2 dans l'état rabattu sur la tête 13 du mât 11 en engageant l'extrémité libre de l'arbre 5 du moyeu 3 dans le manchon de fixation 14. Il engage ensuite les encoches 24 des tiges de connexion 23 sur les ergots 25 du coulisseau 20 dans sa première position en relevant le levier 22. Cette configuration est représentée sur la figure 5.

Sur les figures 6 et 7, l'utilisateur peut abaisser le levier 22 pour faire coulisser le coulisseau 20 le long de l'arbre 5 du moyeu 3 vers sa deuxième position par l'intermédiaire des tiges de connexion 23 exerçant une traction sur le coulisseau 20. Les bielles 21 exercent à leur tour une traction sur les tiges d'armature 6 de manière à faire passer l'armature 2 dans l'état déployé.

Sur la figure 8, une fois que le levier 22 a été complètement abaissé, le coulisseau 20 atteint la deuxième position et l'armature 2 s'étend horizontalement dans l'état déployé sur la tête 13 du mât 11, avec son ouverture orientée verticalement, les élingues externes 7 et internes 8 ayant déformé les tiges d'armature 6 comme expliqué précédemment pour conformer l'armature 2 de manière appropriée.

Les encoches 24 des tiges de liaison 23 peuvent être dégagées des ergots 25 du coulisseau 20 et l'arbre 5 du moyeu 3 peut être remplacé par la poignée 17 du bras de liaison 15 sur la tête 13 du mât 11 avant de basculer l'armature 2 dans la position représentée sur les figures 1 à 4 par l'intermédiaire de l'articulation 18 du bras de liaison 15. L'articulation 18 peut ensuite permettre d'ajuster l'orientation de l'armature 2 par rapport au mât 11. En variante, l'articulation 18 pourrait être réalisée de toute autre manière appropriée pour orienter l'armature 2 par rapport au mât 11, par exemple au moyen d'une rotule.

L'antenne acoustique 1 peut ensuite être connectée à un dispositif d'analyse et de traitement de la mesure des ondes acoustiques réalisée par le réseau de microphones 9 et, le cas échéant, à un système de visualisation des résultats.

L'antenne acoustique 1 peut également comporter d'autres équipements de mesure utiles à la collecte de données pouvant être combinées à la mesure des ondes acoustiques. Par exemple, l'antenne acoustique 1 peut comporter un appareil photo et/ou une caméra qui, avec les microphones 9, permettent de combiner des données visuelles aux données sonores de l'environnement et/ou de la source sonore étudiée.

## Revendications

1. Antenne de mesure (1) comprenant :
- une armature (2) comportant un moyeu (3) présentant un axe central (A), et une pluralité de tiges d'armature (6) disposées autour de l'axe central (A) et s'étendant chacune entre une première extrémité (6a) montée sur le moyeu (3) et une deuxième extrémité (6b) opposée à la première extrémité (6a), l'armature (2) présentant un état rabattu dans lequel les tiges d'armature (6) sont rapprochées de l'axe central (A), et un état déployé dans lequel les tiges d'armature (6) sont écartées de l'axe central (A) de telle manière que l'armature (2) présente globalement une concavité axiale selon l'axe central (A),
- un réseau de capteurs de mesure (9) supporté par l'armature (2), le réseau de capteurs de mesure (9) comportant au moins deux capteurs de mesure (9) montés sur chacune des tiges d'armature (6) à distance l'un de l'autre,
l'antenne de mesure (1) étant **caractérisée en ce que** chacune des tiges d'armature (6) est élastiquement déformable, l'armature (2) comprenant des organes de liaison (7, 8), chaque organe de liaison reliant l'une des tiges d'armature (6) à au moins une autre tige d'armature (6) de sorte que les organes de liaison (7, 8) induisent une déformation des tiges d'armature (6) dans l'état déployé de telle manière que l'armature (2) présente globalement une concavité axiale et que chacune des tiges d'armature (6) présente une courbure transversale entre les première (6a) et deuxième (6b) extrémités, les organes de liaison (7, 8) étant aptes à laisser libre les tiges d'armature (6) dans l'état rabattu de l'armature (2), de sorte que les tiges d'armature (6) sont rappelées élastiquement vers un état libre dans lequel les tiges d'armature (6) sont sensiblement droites et s'étendent sensiblement parallèlement à l'axe central (A).

2. Antenne de mesure (1) selon la revendication 1, dans laquelle chacune des tiges d'armature (6) dans l'état déployé de l'armature a une forme en tronçon de spirale dont la courbure transversale présente un rayon de courbure qui augmente depuis la première extrémité (6a) jusqu'à la deuxième extrémité (6b).

3. Antenne de mesure (1) selon la revendication 1 ou 2, dans laquelle chacune des tiges d'armature (1) dans l'état déployé de l'armature (2) présente une courbure axiale entre les première (6a) et deuxième (6b) extrémités, les courbures axiales des tiges d'armature (6) dans l'état déployé de l'armature (2) formant la concavité axiale de l'armature (2).

4. Antenne de mesure (1) selon l'une quelconque des revendications 1 à 3, dans laquelle les organes de liaison comprennent :
- une pluralité d'élingues externes (7) reliant chacune deux tiges d'armature (6) au voisinage des deuxièmes extrémités (6b) desdites tiges d'armature (6), chacune des élingues externes (7) étant adaptée pour, dans l'état rabattu de l'armature (2), laisser libre lesdites tiges d'armature (6), et pour, dans l'état déployé de l'armature (2), contraindre lesdites tiges d'armature (6) de telle manière que les deuxièmes extrémités (6b) desdites tiges d'armature (6) soient rapprochées l'une de l'autre,
- une pluralité d'élingues internes (8) reliant chacune deux tiges d'armature (6) en des première et deuxième portions respectives desdites tiges d'armature (6), chacune des élingues internes (8) étant adaptée pour, dans l'état rabattu de l'armature (2), laisser libre lesdites tiges d'armature (6), et pour, dans l'état déployé de l'armature (2), contraindre lesdites tiges d'armature (6) de telle manière que les première et deuxième portions desdites tiges d'armature (6) soient rapprochées l'une de l'autre.

5. Antenne de mesure (1) selon la revendication 4, dans laquelle la première portion est située au voisinage de la première extrémité (6a) de l'une des tiges d'armature (6), et la deuxième portion est située au voisinage de la deuxième extrémité (6b) de l'autre tige d'armature (6).

6. Antenne de mesure (1) selon l'une quelconque des revendications 1 à 5, dans laquelle le moyeu (3) comprend :
- une plaque support (4) s'étendant transversalement par rapport à l'axe central (A), la première extrémité (6a) de chacune des tiges d'armature (6) étant montée pivotante sur la plaque support (4) selon un axe de pivotement perpendiculaire à l'axe central (A),
- un arbre (5) s'étendant selon l'axe central (A) depuis la plaque support (4),
- un coulisseau (20) monté coulissant sur l'arbre (5) selon l'axe central (A) entre une première position située à proximité de la plaque support (4) et une deuxième position située à distance de la plaque support (4),
- une pluralité de bielles (21) s'étendant chacune entre une première extrémité montée pivotante selon un premier axe parallèle à l'axe de pivotement sur l'une des tiges d'armature (6), et une deuxième extrémité montée pivotante selon un deuxième axe parallèle à l'axe de pivotement sur le coulisseau (20), les bielles (21) étant adaptées pour, dans la première position du coulisseau (20), placer l'armature (2) dans l'état rabattu, et pour, dans la deuxième position du coulisseau (20), placer l'armature (2) dans l'état déployé.

7. Antenne de mesure (1) selon la revendication 6, comportant en outre un mât (11) qui s'étend entre un pied (12) et une tête (13), et un bras de liaison (15) qui est solidaire du moyeu (3), le bras de liaison (15) étant adapté pour être monté sur la tête (13) du mât (11) et comportant une articulation (18) adaptée pour orienter l'armature (2) par rapport au mât (11).

8. Antenne de mesure (1) selon l'une quelconque des revendications 1 à 7, dans laquelle chacune des tiges d'armature (6) comporte au moins deux supports de capteur (10) sur lesquels les capteurs de mesure (9) sont montés, chacun des supports de capteur (10) comportant une articulation adaptée pour orienter le capteur de mesure (9) par rapport à la tige d'armature (6).

9. Antenne de mesure (1) selon l'une quelconque des revendications 1 à 8 pour réaliser une imagerie acoustique, dans laquelle les capteurs de mesure sont des microphones (9).

10. Système d'imagerie acoustique comprenant une antenne de mesure (1) selon la revendication 9.

11. Utilisation d'une antenne de mesure (1) selon la revendication 9 pour réaliser une imagerie acoustique.

## Patentansprüche

1. Messantenne (1), umfassend:
- ein Gestänge (2), das eine Nabe (3) umfasst, die eine Mittelachse (A) aufweist, und eine Vielzahl von Gestängestangen (6), die um die Mittelachse (A) angeordnet sind und sich jede zwischen einem ersten, an der Nabe (3) montierten Ende (6a) und einem zweiten, dem ersten Ende (6a) gegenüberliegenden Ende (6b) erstrecken, wobei das Gestänge (2) einen zusammengeklappten Zustand aufweist, in dem die Gestängestangen (6) der Mittelachse (A) angenähert sind, und einen aufgeklappten Zustand, in dem die Gestängestangen (6) von der Mittelachse (A) derart beabstandet sind, dass das Gestänge (2) allgemein eine axiale Höhlung entlang der Mittelachse (A) aufweist,
- ein Netz aus Messsensoren (9), das von dem Gestänge (2) getragen wird, wobei das Netz aus Messsensoren (9) mindestens zwei Messsensoren (9) umfasst, die an jeder der Gestängestangen (6) in Abstand zueinander montiert sind,
wobei die Messantenne (1) **dadurch gekennzeichnet ist, dass** jede der Gestängestangen (6) elastisch verformbar ist, wobei das Gestänge (2) Verbindungsglieder (7, 8) umfasst, wobei jedes Verbindungsglied eine der Gestängestangen (6) mit mindestens einer anderen Gestängestange (6) derart verbindet, dass die Verbindungsglieder (7, 8) im aufgeklappten Zustand eine Verformung der Gestängestangen (6) bedingen, derart, dass das Gestänge (2) allgemein eine axiale Höhlung aufweist und dass jede der Gestängestangen (6) eine Querkrümmung zwischen dem ersten (6a) und zweiten (6b) Ende aufweist, wobei die Verbindungsglieder (7, 8), dazu in der Lage sind, die Gestängestangen (6) im zusammengeklappten Zustand des Gestänges (2) derart lockerzulassen, dass die Gestängestangen (6) elastisch in Richtung eines lockeren Zustands zurückgestellt werden, in dem die Gestängestangen (6) im Wesentlichen gerade sind und sich im Wesentlichen parallel zur Mittelachse (A) erstrecken.

2. Messantenne (1) nach Anspruch 1, wobei jede der Gestängestangen (6) im aufgeklappten Zustand des Gestänges eine Form eines Spiralsegments besitzt, dessen Querkrümmung einen Krümmungsradius aufweist, der ab dem ersten Ende (6a) bis zum zweiten Ende (6b) zunimmt.

3. Messantenne (1) nach Anspruch 1 oder 2, wobei jede der Gestängestangen (1) im aufgeklappten Zustand des Gestänges (2) eine axiale Krümmung zwischen dem ersten (6a) und zweiten (6b) Ende aufweist, wobei die axialen Krümmungen der Gestängestangen (6) im aufgeklappten Zustand des Gestänges (2) die axiale Höhlung des Gestänges (2) bilden.

4. Messantenne (1) nach einem der Ansprüche 1 bis 3, wobei die Verbindungsglieder umfassen:
- eine Vielzahl von äußeren Schlingen (7), die jede zwei Gestängestangen (6) in Nachbarschaft der zweiten Enden (6b) der Gestängestangen (6) verbinden, wobei jede der äußeren Schlingen (7) dafür eingerichtet ist, im zusammengeklappten Zustand des Gestänges (2) die Gestängestangen (6) lockerzulassen, und dafür, im aufgeklappten Zustand des Gestänges (2) die Gestängestangen (6) derart zu spannen, dass die zweiten Enden (6b) der Gestängestangen (6) einander angenähert werden,
- eine Vielzahl von inneren Schlingen (8), die jede zwei Gestängestangen (6) an jeweils ersten und zweiten Abschnitten der Gestängestangen (6) verbinden, wobei jede der inneren Schlingen (8) dafür eingerichtet ist, im zusammengeklappten Zustand des Gestänges (2) die Gestängestangen (6) lockerzulassen, und dafür, im aufgeklappten Zustand des Gestänges (2) die Gestängestangen (6) derart zu spannen, dass die ersten und zweiten Abschnitte der Gestängestangen (6) einander angenähert werden.

5. Messantenne (1) nach Anspruch 4, wobei der erste Abschnitt in Nachbarschaft des ersten Endes (6a) der einen der Gestängestangen (6) liegt, und der zweite Abschnitt in Nachbarschaft des zweiten Endes (6b) der anderen Gestängestange (6) liegt.

6. Messantenne (1) nach einem der Ansprüche 1 bis 5, wobei die Nabe (3) umfasst:
- eine Trägerplatte (4), die sich in Bezug auf die Mittelachse (A) quer erstreckt, wobei das erste Ende (6a) jeder der Gestängestangen (6) entlang einer zur Mittelachse (A) senkrechten Schwenkachse schwenkbar an der Trägerplatte (4) montiert ist,
- eine Welle (5), die sich ab der Trägerplatte (4) entlang der Mittelachse (A) erstreckt,
- ein Gleitstück (20), das entlang der Mittelachse (A) zwischen einer ersten Stellung, die in Nähe der Trägerplatte (4) liegt, und einer zweiten Stellung, die in Entfernung zur Trägerplatte (4) liegt, gleitend an der Welle (5) montiert ist,
- eine Vielzahl von Pleueln (21), die sich jeder zwischen einem ersten Ende, das entlang einer ersten, zur Schwenkachse parallelen Achse schwenkbar an einer der Gestängestangen (6) montiert ist, und einem zweiten Ende erstrecken, das entlang einer zweiten, zur Schwenkachse parallelen Achse schwenkbar an dem Gleitstück (20) montiert ist, wobei die Pleuel (21) dafür eingerichtet sind, in der ersten Stellung des Gleitstücks (20) das Gestänge (2) in den zusammengeklappten Zustand zu setzen, und dafür, in der zweiten Stellung des Gleitstücks (20) das Gestänge (2) in den aufgeklappten Zustand zu setzen.

7. Messantenne (1) nach Anspruch 6, weiter einen Mast (11) umfassend, der sich zwischen einem Fuß (12) und einem Kopf (13) erstreckt, und einen Verbindungsarm (15), der fest mit der Nabe (3) verbunden ist, wobei der Verbindungsarm (15) dafür eingerichtet ist, am Kopf (13) des Masts (11) montiert zu werden, und ein Gelenk (18) umfasst, das dafür eingerichtet ist, das Gestänge (2) in Bezug auf den Mast (11) auszurichten.

8. Messantenne (1) nach einem der Ansprüche 1 bis 7, wobei jede der Gestängestangen (6) mindestens zwei Sensorträger (10) umfasst, an denen die Messsensoren (9) montiert sind, wobei jeder der Sensorträger (10) ein Gelenk umfasst, das dafür eingerichtet ist, den Messsensor (9) in Bezug auf die Gestängestange (6) auszurichten.

9. Messantenne (1) nach einem der Ansprüche 1 bis 8 zum Ausführen einer akustischen Bildgebung, wobei die Messsensoren Mikrofone (9) sind.

10. Akustisches Bildgebungssystem, umfassend eine Messantenne (1) nach Anspruch 9.

11. Verwendung einer Messantenne (1) nach Anspruch 9 zum Ausführen einer akustischen Bildgebung.

## Claims

1. Measuring antenna (1) comprising:
- a truss (2) comprising a hub (3) having a central axis (A), and a plurality of truss rods (6) positioned about the central axis (A) and each extending between a first end (6a) mounted on the hub (3) and a second end (6b) opposite the first end (6a), the truss (2) having a folded state wherein the truss rods (6) are brought close to the central axis (A), and a deployed state wherein the truss rods (6) are distanced from the central axis (A) such that the truss (2) has an overall axial concavity relative to the central axis (A),
- an array of measuring sensors (9) borne by the truss (2), the array of measuring sensors (9) comprising at least two measuring sensors (9) mounted on each of the truss rods (6) at a distance from one another,
the measuring antenna (1) being **characterised in that** each of the truss rods (6) is elastically deformable, the truss (2) comprising connecting members (7, 8), each connecting member connecting one of the truss rods (6) to at least one other truss rod (6) so that the connecting members (7, 8) induce a deformation of the truss rods (6) in the deployed state, such that the truss (2) has an overall axial concavity and that each of the truss rods (6) has a transverse curvature between the first (6a) and the second (6b) ends, the connecting members (7, 8) being capable of leaving the truss rods (6) free when the truss (2) is in the folded state, so that the truss rods (6) are elastically brought back to a free state wherein the truss rods (6) are substantially straight and extend substantially parallel to the central axis (A).

2. Measuring antenna (1) according to claim 1, wherein each of the truss rods (6) has the shape of a spiral segment when the truss is in the deployed state, the transverse curvature of which shape has a radius of curvature that is increasing from the first end (6a) as far as the second end (6b).

3. Measuring antenna (1) according to either claim 1 or claim 2, wherein each of the truss rods (1) has an axial curvature between the first (6a) and the second (6b) ends when the truss (2) is in the deployed state, whereby the axial curvatures of the truss rods (6) form the axial concavity of the truss (2) when the truss (2) is in the deployed state.

4. Measuring antenna (1) according to any of claims 1 to 3, wherein the connecting members comprise:
- a plurality of outer cords (7), each of which connects two truss rods (6) in the vicinity of the two ends (6b) of said truss rods (6), each of the outer cords (7) being suitable for leaving said truss rods (6) free when the truss (2) is in the folded state, and, when the truss (2) is in the deployed state, for tensioning said truss rods (6) such that the second ends (6b) of said truss rods (6) are brought closer to one another,
- a plurality of inner cords (8), each of which connects two truss rods (6) at respective first and second portions of said truss rods (6), each of the inner cords (8) being suitable for leaving said truss rods (6) free when the truss (2) is in the folded state, and, when the truss (2) is in the deployed state, for tensioning said truss rods (6) such that the first and second portions of said truss rods (6) are brought closer to one another.

5. Measuring antenna (1) according to claim 4, wherein the first portion is situated in the vicinity of the first end (6a) of one of the truss rods (6), and the second portion is situated in the vicinity of the second end (6b) of the other truss rod (6).

6. Measuring antenna (1) according to any of claims 1 to 5, wherein the hub (3) comprises:
- a bearing plate (4) extending transversally relative to the central axis (A), the first end (6a) of each of the truss rods (6) being mounted such that it pivots on the bearing plate (4) about a pivot axis that is perpendicular to the central axis (A),
- a shaft (5) extending along the central axis (A) from the bearing plate (4),
- a slide (20) mounted such that it slides on the shaft (5) along the central axis (A) between a first position situated in the vicinity of the bearing plate (4) and a second position situated at a distance from the bearing plate (4),
- a plurality of connecting rods (21), each of which extends between a first end mounted such that it pivots about a first axis parallel to the pivot axis on one of the truss rods (6), and a second end mounted such that it pivots about a second axis parallel to the pivot axis on the slide (20), the connecting rods (21) being suitable for bringing the truss (2) into the folded state when the slide (20) is in the first position, and for bringing the truss (2) into the deployed state when the slide (20) is in the second position.

7. Measuring antenna (1) according to claim 6, further comprising a mast (11), which extends between a leg (12) and a head (13), and a connecting arm (15), which is secured to the hub (3), the connecting arm (15) being suitable for being mounted onto the head (13) of the mast (11) and comprising a hinged joint (18) suitable for orienting the truss (2) relative to the mast (11).

8. Measuring antenna (1) according to any of claims 1 to 7, wherein each of the truss rods (6) comprises at least two sensor carriers (10) on which the measuring sensors (9) are mounted, each of the sensor carriers (10) comprising a hinged joint suitable for orienting the measuring sensor (9) relative to the truss rod (6).

9. Measuring sensor (1) according to any of claims 1 to 8, for acoustic imagery, wherein the measuring sensors are microphones (9).

10. Imaging system comprising a measuring antenna (1) according to claim 9.

11. Use of a measuring antenna (1) according to claim 9 for acoustic imagery.
